# EUROPÄISCHE PATENTSCHRIFT

(11) **EP 1 812 930 B1**
(45) Veröffentlichungstag und Bekanntmachung des Hinweises auf die Patenterteilung: **24.11.2010**
(21) Anmeldenummer: 05797216.8
(22) Anmeldetag: 04.10.2005
(51) Int. Cl.: G10L 15/06, G10L 15/08

(54) **VERFAHREN ZUR SPRACHERKENNUNG AUS EINEM AUFGETEILTEN VOKABULAR**
METHOD FOR VOICE RECOGNITION FROM DISTRIBUTED VOCABULARY
PROCEDE DE RECONNAISSANCE VOCALE A PARTIR D'UN VOCABULAIRE REPARTI

(30) Priorität: 16.11.2004 DE 102004055230
(43) Veröffentlichungstag der Anmeldung: 01.08.2007
(73) Patentinhaber: SIEMENS AKTIENGESELLSCHAFT, 80333 München (DE)
(72) Erfinder: KUNSTMANN, Niels, 85540 Haar (DE)
(86) Internationale Anmeldenummer: PCT/EP2005/054979
(87) Internationale Veröffentlichungsnummer: WO 2006/053800

(56) Entgegenhaltungen:
- EP-A- 0 755 046
- US-A- 5 136 654
- US-A- 5 526 463
- US-A- 5 640 488
- JUNQUA J-C: "SMARTSPELL TM: A MULTIPASS RECOGNITION SYSTEM FOR NAME RETRIEVAL OVER THE TELEPHONE" IEEE TRANSACTIONS ON SPEECH AND AUDIO PROCESSING, IEEE INC. NEW YORK, US, Bd. 5, Nr. 2, März 1997 (1997-03), Seiten 173-182, XP000771955 ISSN: 1063-6676

## Beschreibung

Die vorliegende Erfindung betrifft ein Verfahren zur Spracherkennung aus einem vorgebbaren Vokabular.

Spracherkennungssysteme, die einzelne Wörter oder Wortketten aus einem vorgebbaren Vokabular erkennen können, werden üblicherweise zur Bedienung von Telefonapparaten oder von nicht sicherheitsrelevanten Komponenten der Ausstattung eines Kraftfahrzeugs durch gesprochene Kommandos benutzt. Weitere bekannte Beispiele betreffen die Bedienung von Operationsmikroskopen durch den operierenden Arzt und die Bedienung von Personalcomputern.

Bei der Bedienung eines Autonavigationssystems kann beispielsweise ein gewünschter Zielort durch Spracheingabe mitgeteilt werden. Hierzu sind zwei Verfahren bekannt, die im Folgenden kurz dargelegt werden.

Nach einem ersten Verfahren werden die über 70 000 deutschen möglichen Zielorte nach Regionen zusammengefasst. Somit ergeben sich insgesamt ca. 1000 Regionen, die jeweils durch einen großen zentralen Ort gekennzeichnet sind. Da die Zuordnung von kleinen zu großen Orten nicht eindeutig und zudem einem Anwender schwer vermittelbar ist, werden einzelne Orte mehreren Regionen zugeteilt. Der Ort "Holzkirchen" liegt beispielsweise sowohl in der Region "München" als auch in der Region "Bad Tölz". Die Eingabe eines Zielortes erfolgt im Anwenderdialog zweistufig, indem der Anwender zunächst eine größere Stadt in der Nähe des gewünschten Zielortes angibt. Nachdem gegebenenfalls nach einer Auswahl aus einer Auswahlliste die Zielregion erkannt wurde, wird der Benutzer aufgefordert, den genauen Zielort innerhalb der Zielregion zu nennen. Aus den Erkennerhypothesen kann der Benutzer dann per Sprache oder auf einer Tastatur die gewünschte Eingabe bestätigen. Auf einer DVD sind die zu einer Region gehörenden Navigationsdaten in einem zusammenhängenden Block abgespeichert, wodurch der Suchvorgang von Daten auf einer DVD erheblich beschleunigt werden kann.

Bei einem zweiten Verfahren teilt ein Anwender einen Zielort dem Navigationssystem durch Anbuchstabieren mit. Anhand der erkannten Buchstabenfolge werden durch das Navigationssystem aus der Menge aller Orte diejenigen bestimmt, deren Anfangsbuchstaben der erkannten Buchstabenfolge ähneln. In einer Auswahlliste werden die Orte der Ähnlichkeit nach geordnet, dem Benutzer zur weiteren Auswahl angeboten. Der Anwender kann anschließend wiederum per Spracheingabe oder über eine Tastatur den gewünschten Zielort angeben.

Nachteilig bei dem ersten Verfahren ist, dass der Anwender zumindest zweimal die Eingabe seines Zielortes vornehmen muss. Außerdem ist das Verfahren mit weiteren Komforteinbußen verbunden, da die Zuordnung von kleinen zu großen Orten nicht eindeutig ist und zudem ein geographisches Vorwissen beim Anwender voraussetzt. Beim zweiten Verfahren muss für einen Erkennungsvorgang jeweils innerhalb der kompletten Liste aller möglichen Orte gesucht werden, um danach eine entsprechende Auswahlliste zusammenzustellen. Die Ladezeiten und Verarbeitungszeiten bis zur Darstellung der Auswahlliste sind sehr zeitintensiv, weshalb das Verfahren beim Anwender auf eine geringe Akzeptanz stößt.

Ferner ist aus der US 5,640,488 ein System und ein Verfahren bekannt, bei dem die Einträge eines Vokabulars zur Spracherkennung in Cluster geordnet werden. Dabei ist vorgesehen, dass in einem ersten Schritt gemäß vorgegebener Regeln beispielsweise aufgrund einer alphabetischen Zuordnung, die jeweiligen Worte des Vokabulars in Cluster klassifiziert werden. In weiteren iterativen Schritten werden anhand von Ähnlichkeitsabständen Clusterzentren bestimmt und erneut alle Worte des Vokabulars in Abhängigkeit von ihrem jeweiligen Ähnlichkeitsabstand vom Clusterzentrum Clustern zugeordnet. Dadurch soll erreicht werden, dass weniger Vergleiche zwischen einer Worteingabe und den Vokabularelementen erfolgen müssen.

Der vorliegenden Erfindung stellt sich somit die Aufgabe, ein Verfahren zur Spracherkennung aus einem vorgegebenen Vokabular anzugeben, durch das eine komfortable und schnelle Anwendung durch einen Benutzer ermöglicht wird.

Erfindungsgemäß wird diese Aufgabe durch ein Verfahren mit den in Anspruch 1 angegebenen Merkmalen gelöst. Vorteilhafte Weiterbildungen der vorliegenden Erfindung sind in den abhängigen Ansprüchen angegeben.

Gemäß der vorliegenden Erfindung ist in einem Verfahren zur Erkennung einer gesprochenen Eingabe aus einem vorgebbaren Vokabular eine Einteilung des vorgebbaren Vokabulars in eine Anzahl von Abschnitten mit phonetisch ähnlichen Wörtern vorgenommen. In einem ersten Erkennungsschritt wird die gesprochene Eingabe einem der Abschnitte zugeteilt. In einem zweiten Erkennungsschritt wird die gesprochene Eingabe aus dem Vokabular des zugeteilten Abschnitts ermittelt. Zur Einteilung des vorgebbaren Vokabulars in eine Anzahl von Abschnitten mit phonetisch ähnlichen Wörtern werden in einem ersten Schritt Abstandsmaße für eine phonetische Ähnlichkeit zweier Wörter ermittelt. In einem zweiten Schritt wird dann durch einen Vektorquantisierungsalgorithmus anhand der Abstandsmaße das vorgebbare Vokabular in eine Anzahl von Abschnitten mit phonetisch ähnlichen Wörtern eingeteilt. Zur Ermittlung des Abstandsmaßes für eine phonetische Ähnlichkeit zwischen zwei Wörtern ist in einem ersten Schritt zu jeweils einer Testäußerung eine Rangliste von erkannten Wörtern mit dazu gehörigem Ranglistenwert zu ermitteln. In einem zweiten Schritt wird dann das Abstandsmaß zwischen zwei Wörtern ermittelt, indem die Differenzen der Ranglistenwerte der zwei Wörter für die jeweiligen Testäußerungen gemittelt werden. Dies hat den Vorteil, dass von einem Benutzer nur noch eine Eingabe zur Bestimmung seiner gesprochenen Eingabe benötigt wird. Zusätzlich ist eine Suche in dem kompletten Vokabular nicht mehr erforderlich und damit weniger zeitintensiv, da die Suche auf den zugeteilten Abschnitt beschränkt bleibt.

Durch einen Vektorquantisierungsalgorithmus wird eine Anzahl von hochdimensionalen Datenvektoren einigen diskreten Repräsentanten zugewiesen, welche man als Codebuchvektoren bezeichnet. Ein Beispiel für einen Vektorquantisierungsalgorithmus ist das so genannte k-means Clustering, bei dem jeweils ein Datenvektor einem von k Codebuchvektoren zugeordnet wird, unter der Maßgabe, dass die Summe der quadratischen Distanzen des Datenvektors zum zugeordneten Codebuchvektor minimal ist.

Ein Wort aus dem vorgebbaren Vokabular wird gemäß einer Weiterbildung der vorliegenden Erfindung zumindest einem Abschnitt mit phonetisch ähnlichen Wörtern zugeordnet. Dadurch wird in vorteilhafter Weise die Erkennungssicherheit des Systems erhöht, da ein Wort in unterschiedlichen Abschnitten gefunden werden kann.

Entsprechend einer Ausführungsvariante wird das vorgebbare Vokabular gemäß den Abschnitten mit phonetisch ähnlichen Wörtern gegliedert blockweise auf einem Speichermedium gespeichert, welches beispielsweise als DVD ausgeführt sein kann. Dies hat die vorteilhafte Wirkung, dass ein Lesezugriff auf das Speichermedium (DVD) schneller ausgeführt werden kann.

Nach einer weiteren vorteilhaften Ausgestaltung der vorliegenden Erfindung werden die Abschnitte mit phonetisch ähnlichen Wörtern jeweils durch einen repräsentierenden Eintrag gekennzeichnet. Im ersten Erkennungsschritt wird dann die gesprochene Eingabe dem Abschnitt zugeteilt, dessen repräsentierender Eintrag der gesprochenen Eingabe am ähnlichsten ist. Somit wird eine zügige Zuordnung der gesprochenen Eingabe zu einem der Abschnitte gewährleistet.

Die gesprochene Eingabe kann zumindest ein gesprochenes Wort sein oder es können einzelne gesprochene Buchstaben sein.

Gemäß einer weiteren Ausgestaltung der vorliegenden Erfindung können Abstandsmaße für eine phonetische Ähnlichkeit zweier Wörter ermittelt werden, indem Abstandswerte für eine Ähnlichkeit zweier Buchstaben ermittelt werden und für das Abstandsmaß zweier Buchstabenfolgen die Abstandswerte der einzelnen Buchstaben zusammengezählt werden. Für eine vorgegebene Länge einer Buchstabenfolge kann dann in einem zweiten Schritt ein Vektorquantisierungsalgorithmus anhand der Abstandsmaße und/oder Gesamtabstandsmaße das vorgebbare Vokabular in eine Anzahl von Abschnitten mit phonetisch ähnlichen Wörtern einteilen.

Entsprechend einer weiteren vorteilhaften Weiterentwicklung der vorliegenden Erfindung können hierbei mehrere Einteilungen des vorgebbaren Vokabulars vorgenommen werden, jeweils für eine unterschiedliche Länge der Buchstabenfolgen. Dadurch wird der Vorteil erzielt, dass für eine unterschiedliche Anzahl von gesprochenen Buchstaben jeweils eine daran angepasste Einteilung des Vokabulars vorhanden ist und der Suchvorgang dadurch beschleunigt wird.

Eine weitere Möglichkeit ein Abstandsmaß für die Ähnlichkeit zweier Wörter zu ermitteln, ist beispielsweise die Verwendung eines Levenshtein-Abstandes als Abstandsmaß.

Der Levenshtein-Abstand ist ein Maß für den Unterschied zwischen zwei Zeichenketten als minimaler Anzahl atomarer Veränderungen, die notwendig sind, um die erste Zeichenkette in die zweite Zeichenkette umzuformen. Atomare Veränderungen sind beispielsweise das Einfügen, das Löschen und das Ersetzen eines einzelnen Buchstaben. Üblicherweise ordnet man den atomaren Veränderungen Kosten zu und erhält somit durch Zusammenzählen der einzelnen kosten ein Maß für den Abstand bzw. die Ähnlichkeit zweier Zeichenketten.

Die vorliegende Erfindung wird nachfolgend an einem Ausführungsbeispiel anhand der Zeichnungen näher erläutert. Es zeigt
- Figur 1: eine schematische Darstellung eines in Abschnitte eingeteilten Vokabulars,
- Figur 2: eine schematische Darstellung einer Einteilung eines Vokabulars in Abschnitte mit dazugehörigen Cluster- zentren.

In dem Ausführungsbeispiel wird die Umsetzung der vorliegenden Erfindung in einem Autonavigationssystem beschrieben, bei welchem ein gewünschter Zielort durch eine gesprochene Eingabe angegeben werden kann. Die Navigationsdaten befinden sich in diesem Beispiel auf einer DVD.

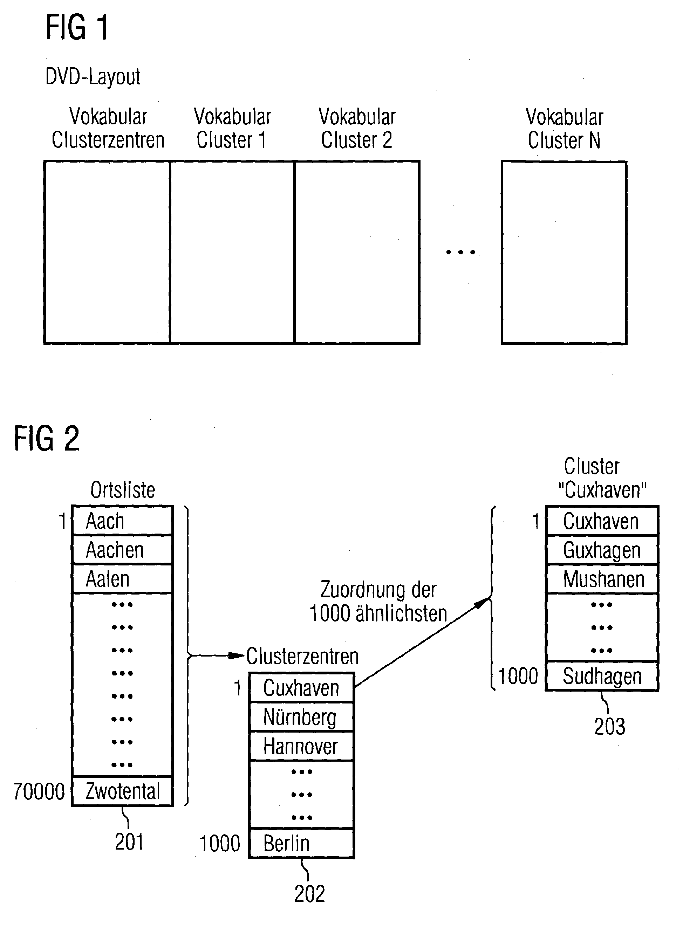

Figur 1 zeigt eine mögliche Speicherstruktur auf der Navigationsdaten-DVD. Phonetisch ähnliche Navigationsdaten wie zum Beispiel Ortsnamen oder Straßennamen sind hierbei in Abschnitten zusammengefasst, gekennzeichnet durch ein Clusterzentrum, auf der DVD hinterlegt. Wenn nun eine gesprochene Eingabe einem Clusterzentrum zugeordnet wurde, kann sehr schnell ein Ortsname innerhalb des eingegrenzten Speicherbereichs des zugewiesenen Abschnitts gefunden werden, ohne dass hierfür die gesamte DVD durchsucht werden müsste.

Figur 2 zeigt beispielhaft einen Ausschnitt aus einer Ortsnamenliste 201, wie er auf einer Navigationsdaten-DVD abgelegt sein könnte. Durch ein Clustering-Verfahren in Schritt 202 werden aus der Ortsnamenliste 1000 Clusterzentren identifiziert. Jedem der Clusterzentren werden in Schritt 203 wiederum 1000 Ortsnamen aus der Ortsnamenliste 201 zugeordnet. Somit wurde die Ortsnamenliste in 1000 Abschnitte mit jeweils 1000 Ortsnamenseinträgen unterteilt, welche in einer Speicherstruktur nach Figur 1 auf einem Speichermedium abgespeichert werden kann.

In einem ersten Ausführungsbeispiel wird ein Verfahren zur Eingabe von Städtenamen in einem Navigationssystem beschrieben. Zunächst wird hierzu eine Ortsnamenliste datengetrieben in Abschnitte unterteilt. Hierzu wird ein Vektorquantisierungsverfahren verwendet, welches alle Ortsnamen aus der Ortsnamenliste einer begrenzten Anzahl von Codebuchvektoren (in diesem Fall das Zentroid der zugeordneten Ortsnamen) zuordnet. Hierzu wird ein Abstandsmaß benötigt, welches ein Maß für die phonetische Ähnlichkeit zweier Ortsnamen darstellt. Ein solches Abstandsmaß kann beispielsweise auf die im Folgenden geschilderte Art und Weise ermittelt werden. Um ein Abstandsmaß für die phonetische Ähnlichkeit von "München" und "Bremen" zu finden, werden zunächst die Ranglistenwerte dieser beiden Städte für mehrere Testäußerungen wie beispielsweise "Münster", "Bonn" und "Darmstadt" ermittelt. Anschließend werden die Absolutbeträge der Differenzen der Ranglistenwerte der zwei Städtenamen "München" und "Bremen" über alle Testäußerungen gemittelt. Dieses Abstandsmaß kann nunmehr unter Verwendung eines Vektorquantisierungsverfahrens zur Einteilung der Ortsnamenliste in Abschnitte mit phonetisch ähnlichen Ortsnamen verwendet werden.

Legt man nun beispielsweise die Anzahl der Clusterzentren auf 1000 fest, erhält man eine Einteilung der Ortsnamenliste in 1000 Abschnitte. Nachdem die Clusterzentren bestimmt worden sind, teilt man jedem Clusterzentrum wiederum 1000 Ortsnamen zu. Diese sich überlappenden Abschnitte werden auf der DVD jeweils als Block abgespeichert. Die Erkennung einer gesprochenen Eingabe erfolgt intern nun zweistufig. In der ersten Stufe ordnet das Spracherkennungssystem die gesprochene Eingabe demjenigen Abschnitt zu, dessen Clusterzentrum der gesprochenen Eingabe am ähnlichsten ist. Die Ortsnamen des zugeordneten Abschnitts auf der DVD können in der zweiten Stufe schnell geladen werden, da sie schon als Block auf der DVD hinterlegt sind. Aus dieser Liste der Ortsnamen erkennt das Spracherkennungssystem den gewünschten Zielort.

In einem zweiten Ausführungsbeispiel wird dem Navigationssystem der gewünschte Zielort durch Anbuchstabieren bekannt gemacht. Es wird ein Abstandswert für den Abstand zweier Buchstaben ermittelt, so dass sich ein Abstandsmaß ergibt, welches abhängig von der Länge der gesprochenen Buchstabenfolge ist. Werden beispielsweise die Buchstaben "A U" erkannt, so können einem Abschnitt unter anderem die Orte "Au", "Aue", "Augsburg" oder "Aurich" zugeordnet werden. Werden durch das Spracherkennungssystem dagegen die Buchstaben "A U E" erkannt, so werden dem Abschnitt die Orte Aue, Augsburg oder Aurich zugeordnet. Je nach ermitteltem Abstand der Buchstaben "G" und "R" erhält Augsburg oder Aurich einen höheren Ranglistenwert. Für unterschiedliche Längen der Buchstabenfolgen ergibt sich also eine unterschiedliche Einteilung der Ortsnamenliste in Abschnitte. In diesem Beispiel wird für die Buchstabenfolgenlängen von 3, 5 und 7 Buchstaben eine Einteilung der Ortsnamenliste in Abschnitte mit phonetisch ähnlichen Wörtern durchgeführt und anschließend die ermittelten Abschnitte für die drei Buchstabenfolgenlängen wiederum blockweise auf der Navigationsdaten-DVD abgespeichert.

Bei der Spracherkennung wird zunächst entschieden, wie viele Buchstaben gesprochen wurden und anhand dessen das ähnlichste Clusterzentrum aus den Abschnitten für diese Buchstabenfolgenlänge ermittelt. Aus der Ortsnamenliste des zugeordneten Abschnitts wird dann der gewünschte Zielort bestimmt.

Die Anwendung der vorliegenden Erfindung ist nicht auf die hier beschriebenen Ausführungsbeispiele beschränkt.

## Patentansprüche

1. Verfahren zur Erkennung einer gesprochenen Eingabe aus einem vorgebbaren Vokabular,
wobei
- das vorgebbare Vokabular in einer Anzahl von Abschnitten mit phonetisch ähnlichen Wörtern eingeteilt ist,
- in einem ersten Erkennungsschritt die gesprochene Eingabe einem der Abschnitte zugeteilt wird,
- in einem zweiten Erkennungsschritt die gesprochene Eingabe aus einem Vokabular des zugeteilten Abschnitts ermittelt wird,
- das vorgebbare Vokabular entsprechend den Abschnitten mit phonetisch ähnlichen Wörtern gegliedert auf einem Speichermedium abgespeichert ist,
**dadurch gekennzeichnet, dass**
zur Einteilung des vorgebbaren Vokabulars in eine Anzahl von Abschnitten mit phonetisch ähnlichen Wörtern
- in einem ersten Schritt zu jeweils einer Testäußerung eine Rangliste von erkannten Wörtern mit dazugehörigem Ranglistenwert ermittelt wird,
- in einem zweiten Schritt ein Abstandsmaß zwischen zwei Wörtern ermittelt wird, indem die Differenzen der Ranglistenwerte der zwei Wörter für die jeweiligen Testäußerungen gemittelt werden, und
- in einem dritten Schritt ein Vektorquantisierungsalgorithmus anhand der Abstandsmaße das vorgebbare Vokabular in eine Anzahl von Abschnitten mit phonetisch ähnlichen Wörtern einteilt.

2. Verfahren nach Anspruch 1,
wobei ein Wort aus dem vorgebbaren Vokabular zumindest einem Abschnitt mit phonetisch ähnlichen Wörtern zugeordnet ist.

3. Verfahren nach mindestens einem der Ansprüche 1 bis 2, wobei
- die Abschnitte mit phonetisch ähnlichen Wörtern jeweils durch einen repräsentierenden Eintrag **gekennzeichnet** werden,
- im ersten Erkennungsschritt die gesprochene Eingabe dem Abschnitt zugeteilt wird, dessen repräsentierendem Eintrag sie am ähnlichsten ist.

4. Verfahren nach mindestens einem der Ansprüche 1 bis 3, wobei die gesprochene Eingabe zumindest ein gesprochenes Wort ist.

5. Verfahren nach mindestens einem der Ansprüche 1 bis 3, wobei die gesprochene Eingabe einzelne gesprochene Buchstaben sind.

6. Verfahren nach mindestens einem der Ansprüche 1 bis 5, wobei zur Ermittlung des Abstandsmaßes für eine phonetische Ähnlichkeit zwischen zwei Wörtern
- Abstandswerte für eine Ähnlichkeit zweier Buchstaben ermittelt werden und für das Abstandsmaß zweier Buchstabenfolgen die Abstandswerte zusammengezählt werden.

7. Verfahren nach Anspruch 6,
wobei mehrere Einteilungen des vorgebbaren Vokabulars vorgenommen werden, jeweils für eine unterschiedliche Länge der Buchstabenfolgen.

8. Verfahren nach mindestens einem der Ansprüche 1 bis 7, wobei als Abstandsmaß eine Levenshtein-Abstand herangezogen wird.

## Claims

1. Method for recognizing a spoken input using a predefinable vocabulary,
wherein
- the predefinable vocabulary is subdivided into a number of sections containing phonetically similar words,
- in a first recognition step the spoken input is assigned to one of the sections,
- in a second recognition step the spoken input is determined from a vocabulary of the assigned section,
- the predefinable vocabulary, structured in accordance with the sections containing phonetically similar words, is stored on a storage medium,
**characterised in that**
to subdivide the predefinable vocabulary into a number of sections containing phonetically similar words
- in a first step a ranking of recognised words with an associated ranking value is determined in relation to one test utterance in each case,
- in a second step a distance measure between two words is determined, by averaging the differences of the ranking values of the two words for the respective test utterances, and
- in a third step the predefinable vocabulary is subdivided by a vector quantisation algorithm with the aid of the distance measures into a number of sections containing phonetically similar words.

2. Method according to claim 1,
wherein a word from the predefinable vocabulary is assigned to at least one section containing phonetically similar words.

3. Method according to at least one of claims 1 to 2, wherein
- the sections containing phonetically similar words are **characterised in** each case by a representative entry,
- in the first recognition step the spoken input is assigned to the section to whose representative entry it is most similar.

4. Method according to at least one of claims 1 to 3, wherein the spoken input is at least one spoken word.

5. Method according to at least one of claims 1 to 3, wherein the spoken input is individual spoken letters.

6. Method according to at least one of claims 1 to 5, wherein to determine the distance measure for a phonetic similarity between two words
- distance values for a similarity of two letters are determined and the distance values for the distance measure of two letter sequences are added together.

7. Method according to claim 6,
wherein several subdivisions of the predefinable vocabulary are made, in each case for a different length of letter sequences.

8. Method according to at least one of claims 1 to 7, wherein a Levenshtein distance is used as the distance measure.

## Revendications

1. Procédé de reconnaissance d'une saisie vocale à partir d'un vocabulaire prédéterminable,
- le vocabulaire prédéterminable étant réparti en un nombre de segments contenant des mots phonétiquement similaires,
- la saisie vocale, dans une première étape de reconnaissance, étant associée à l'un des segments,
- la saisie vocale, dans une deuxième étape de reconnaissance, étant déterminée à partir d'un vocabulaire du segment associé,
- le vocabulaire prédéterminable étant sauvegardé sur un support de mémoire de manière organisée conformément aux segments contenant des mots phonétiquement similaires,
**caractérisé en ce que**, pour répartir le vocabulaire prédéterminable en un nombre de segments contenant des mots phonétiquement similaires,
- dans une première étape est déterminée, pour respectivement un énoncé de test, une liste de classement de mots reconnus avec une valeur de liste de classement associée,
- dans une deuxième étape est déterminée une mesure de distance entre deux mots par calcul de la moyenne des différences des valeurs de liste de classement des deux mots pour les énoncés de test respectifs et
- un algorithme de quantification vectorielle, dans une troisième étape, répartit le vocabulaire prédéterminable, à l'aide des mesures de distance, en un nombre de segments contenant des mots phonétiquement similaires.

2. Procédé selon la revendication 1, un mot du vocabulaire prédéterminable étant associé au moins à un segment contenant des mots phonétiquement similaires.

3. Procédé selon au moins l'une des revendications 1 à 2,
- les segments contenant des mots phonétiquement similaires étant marqués respectivement par une entrée représentative,
- la saisie vocale, à la première étape de reconnaissance, étant associée au segment dont l'entrée représentative lui est la plus similaire.

4. Procédé selon au moins l'une des revendications 1 à 3, la saisie vocale étant au moins un mot parlé.

5. Procédé selon au moins l'une des revendications 1 à 3, la saisie vocale consistant en des lettres uniques prononcées.

6. Procédé selon au moins l'une des revendications 1 à 5, des valeurs de distance pour une similitude entre deux lettres étant déterminées et les valeurs de distance étant additionnées, pour la mesure de distance entre deux suites de lettres, pour déterminer la mesure de distance pour une similitude phonétique entre deux mots.

7. Procédé selon la revendication 6, plusieurs répartitions du vocabulaire prédéterminable étant effectuées respectivement pour une longueur différente des suites de lettres.

8. Procédé selon au moins l'une des revendications 1 à 7, une distance de Levenshtein étant prise comme mesure de distance.
